(19) Europäisches Patentamt
European Patent Office
Office européen des brevets

(11) **EP 2 964 739 B1**

(12) **EUROPÄISCHE PATENTSCHRIFT**

(45) Veröffentlichungstag und Bekanntmachung des Hinweises auf die Patenterteilung:
**23.08.2017 Patentblatt 2017/34**

(21) Anmeldenummer: **14705750.9**

(22) Anmeldetag: **18.02.2014**

(51) Int Cl.:
**C11C 1/10** (2006.01)

(86) Internationale Anmeldenummer:
**PCT/EP2014/053095**

(87) Internationale Veröffentlichungsnummer:
**WO 2014/135366 (12.09.2014 Gazette 2014/37)**

(54) **ISONONYLESTER AUF BASIS VON FETTSÄUREGEMISCHEN AUS PFLANZLICHEN ÖLEN**

ISONONYL ESTERS ON THE BASIS OF FATTY ACID MIXTURES CONSISTING OF VEGETABLE OILS

ESTER ISONONYLIQUE À BASE DE MÉLANGES D'ACIDES GRAS OBTENUS À PARTIR D'HUILES VÉGÉTALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2013 DE 102013203973**

(43) Veröffentlichungstag der Anmeldung:
**13.01.2016 Patentblatt 2016/02**

(73) Patentinhaber: **Evonik Degussa GmbH**
**45128 Essen (DE)**

(72) Erfinder:
• WOLDT, Benjamin
  44892 Bochum (DE)
• GRASS, Michael
  45721 Haltern am See (DE)
• WOELK-FAEHRMANN, Michael
  45768 Marl (DE)
• SCHNEIDER, Charlotte
  45701 Herten (DE)

(56) Entgegenhaltungen:
WO-A1-2011/072346    WO-A2-2011/090812
WO-A2-2013/003225    US-B2- 8 389 625

**Beschreibung**

Die Erfindung betrifft ein Isononylestergemisch eines epoxidierten Fettsäuregemisches, wobei das Fettsäuregemisch aus einem pflanzlichen Öl gewonnen wurde, und wobei der Anteil an gesättigten Fettsäuren im Isononylestergemisch unter dem Anteil an gesättigten Fettsäuren des pflanzlichen Öles liegt, aus dem die Fettsäuren gewonnen wurden.

Des Weiteren betrifft die Erfindung Verfahren zu dessen Herstellung, sowie dessen Verwendung als Weichmacher für Polymere.

In WO 01/98404 A2 werden Weichmacher auf Basis von unterschiedlichen Fettsäureestern beschrieben, bei denen der Säureanteil aus pflanzlichen Ölen stammt.

Die WO 2013/003225 A2 beschreibt ein Herstellungsverfahren für epoxidierte Fettsäureester, sogenannte "grüne Weichmacher".

WO2011/072346 beschreibt eine Herstellungsverfahren für epoxidierte Isononylester aus pflanzlichen Ölen. In der Zeitschrift "Visions in Plastics" vom Oktober 2012 (GIT-Verlag, Vol 3, S. 28-29) wurde in dem Artikel "Test the Best" von D. Ortiz Martinz beschrieben, dass der Weichmacher PLS Green 9, ein epoxidiertes Isononylsojat, signifikante Unverträglichkeiten zeigt.

Die Aufgabenstellung bestand zum einen darin, weitere Ester (bzw. Estergemische) bereitzustellen, deren Säureanteil aus Fettsäuren von natürlich vorkommenden Ölen stammt, und welche gute Weichmachereigenschaften aufweisen und zum anderen ein Herstellungsverfahren bereitzustellen, mit welchem diese Ester (bzw. Estergemische) hergestellt werden können.

Die Aufgabe wird gelöst durch ein Estergemisch nach Anspruch 1.

Isononylestergemisch eines epoxidierten Fettsäuregemisches, wobei das Fettsäuregemisch aus einem pflanzlichen Öl gewonnen wurde, und wobei der Anteil an gesättigten Fettsäuren im Isononylestergemisch unter dem Anteil an gesättigten Fettsäuren des pflanzlichen Öles liegt, aus dem die Fettsäuren gewonnen wurden, und die mittlere Anzahl an Epoxidgruppen pro Fettsäure größer 1,00 ist.

In einer Ausführungsform handelt es sich bei dem pflanzlichen Öl um Sojaöl.

In einer weiteren Ausführungsform handelt es sich bei dem pflanzlichen Öl um Rapsöl.

In einer weiteren Ausführungsform handelt es sich bei dem pflanzlichen Öl um Leinöl.

In einer weiteren Ausführungsform handelt es sich bei dem pflanzlichen Öl um ein Gemisch aus Sojaöl und Rapsöl, oder ein Gemisch aus Sojaöl und Leinöl, oder ein Gemisch aus Rapsöl und Leinöl.

In einer Ausführungsform ist die mittlere Anzahl an Epoxidgruppen pro Fettsäure größer 1,20, vorzugsweise größer als 1,30, ganz besonders bevorzugt größer 1,40.

In einer Ausführungsform ist der Anteil an gesättigten Fettsäuren kleiner 10 Flächen-%, vorzugsweise kleiner 8 Flächen-%, besonders bevorzugt kleiner 4 Flächen-%.

Neben dem Isononylestergemisch selbst wird auch ein Verfahren zu dessen Herstellung beansprucht.

Verfahren zur Herstellung eines zuvor beschriebenen Isononylestergemisches umfassend die Verfahrensschritte:

      a1) Gewinnung eines Fettsäuregemisches aus einem pflanzlichen Öl,
      b1) Abreicherung des Anteils an gesättigten Fettsäuren im Fettsäuregemisch,
      c1) Epoxidierung des Fettsäuregemisches,
      d1) Veresterung des Fettsäurengemisches mit Isononanol.

Hierbei können die Verfahrensschritte b1), c1) und d1) in beliebiger Reihenfolge erfolgen.

Verfahren zur Herstellung eines zuvor beschriebenen Isononylestergemisches umfassend die Verfahrensschritte:

      a2) Gewinnung eines Fettsäureestergemisches aus einem pflanzlichen Öl,
      b2) Abreicherung des Anteils an gesättigten Fettsäureestern im Fettsäureestergemisch,
      c2) Epoxidierung des Fettsäureestergemisches,
      d2) Umesterung des Fettsäureestergemisches mit Isononanol.

Hierbei können die Verfahrensschritte b2), c2) und d2) in beliebiger Reihenfolge erfolgen.

In einer Variante des Verfahrens erfolgt die Abreicherung mittels Destillation der epoxidierten Ester.

In einer bevorzugten Verfahrensvariante wird zunächst der Fettsäuremethylester hergestellt und epoxidiert. Der epoxidierte Fettsäuremethylester wird anschließend in eine Fraktion reich an gesättigten Fettsäuremethylestern und eine Fraktion reich an epoxidierten Fettsäuremethylestern aufgetrennt. Diese Auftrennung kann beispielsweise durch Destillation geschehen.

Bevorzugt ist ein Verfahren zur Herstellung eines zuvor beschriebenen Isononylestergemisches umfassend die Verfahrensschritte:

i) Gewinnung eines Fettsäureestergemisches aus einem pflanzlichen Öl,
ii) Epoxidierung des Fettsäureestergemisches,
iii) Abreicherung des Anteils an gesättigten, epoxidierten Fettsäureestern im Fettsäureestergemisch mittels Destillation,
iv) Umesterung des epoxidierten Fettsäureestergemisches mit Isononanol.

In einer weiteren Variante des Verfahrens erfolgt die Abreicherung mittels Kristallisation.

Des Weiteren wird auch die Verwendung des Isononylestergemisches als Weichmacher in Polymeren beansprucht.

Verwendung eines zuvor beschriebenen Esters oder Estergemisches als Weichmacher für ein Polymer ausgewählt aus: Polyvinylchlorid, Polyvinylidenchlorid, Polymilchsäure, Polyurethanen, Polyvinylbutyral, Polyalkylmethacrylaten oder deren Copolymeren.

Bevorzugt ist hierbei die Verwendung eines zuvor beschriebenen Esters oder Estergemisches als Weichmacher für Polyvinylchlorid.

Die erfindungsgemäßen Ester oder Estergemische können als Weichmacher zur Modifizierung von Polymeren eingesetzt werden. Diese Polymere sind beispielsweise ausgewählt aus der Gruppe bestehend aus:

Polyvinylchlorid (PVC), Polyvinylidenchlorid (PVDC), Polyacrylaten, insbesondere Polymethylmethacrylat (PMMA), Polyalkylmethacrylat (PAMA), Fluorpolymeren, insbesondere Polyvinylidenfluorid (PVDF), Polytetrafluorethylen (PTFE), Polyvinylacetat (PVAc, Polyvinylalkohol (PVA), Polyvinylacetale, insbesondere Polyvinylbutyral (PVB), Polystyrolpolymere, insbesondere Polystyrol (PS), Expandierbares Polystyrol (EPS), Acrylonitril-Styrol-Acrylat (ASA), Styrolacrylonitril (SAN), Acrylonitril-Butadien-Styrol (ABS), Styrol-Maleinsäureanhydrid-Copolymer (SMA), Styrol-Methacrylsäure-Copolymer, Polyolefine, insbesondere Polyethylen (PE) oder Polypropylen (PP), thermoplastische Polyolefine (TPO), Polyethylen-Vinylacetat (EVA), Polycarbonate, Polyethylenterephthalat (PET), Polybutylenterephthalat (PBT), Polyoxymethylen (POM), Polyamid (PA), Polyethylenglykol (PEG), Polyurethan (PU), Thermoplastisches Polyurethan (TPU), Polysulfide (PSu), Biopolymere, insbesondere Polymilchsäure (PLA), Polyhydroxybutyral (PHB), Polyhydroxyvaleriansäure (PHV), Polyester, Stärke, Cellulose und Cellulose-Derivate, insbesondere Nitrocellulose (NC), Ethylcellulose (EC), Celluloseacetat (CA), CelluloseAcetat/Butyrat (CAB), Gummi oder Silikone sowie Mischungen oder Copolymere der genannten Polymere oder deren monomeren Einheiten aufweisen. Vorzugsweise weisen die erfindungsgemäßen Polymere PVC oder Homo- oder Copolymere auf Basis von Ethylen, Propylen, Butadien, Vinylacetat, Glycidylacrylat, Glycidylmethacrylat, Methacrylaten, Ethylacrylaten, Butylacrylaten oder Methacrylaten mit am Sauerstoffatom der Estergruppe gebundenen Alkylresten von verzweigten oder unverzweigten Alkoholen mit einem bis zehn Kohlenstoffatome(n), Styrol, Acrylnitril oder cyclischen Olefinen auf.

Bevorzugt enthält das Polymer als PVC-Typ Suspensions-, Masse-, Mikrosuspensions- oder Emulsions-PVC.

Bezogen auf 100 Massenteile Polymer enthalten die Polymere vorzugsweise von 5 bis 200, bevorzugt von 10 bis 150 Massenteile an Weichmacher.

Den Mischungen aus PVC und den erfindungsgemäßen Estern können auch noch andere Additive wie zum Beispiel Thermostabilisatoren, Füllstoffe, Pigmente, Treibmittel, Biozide, UV-Stabilisatoren etc. beigemischt werden.

Die erfindungsgemäßen Ester / Estergemische können auch mit anderen Weichmachern kombiniert werden, beispielsweise mit anderen Estern von natürlichen Fettsäuren oder mit Öl aus pflanzlichen Quellen.

Des Weiteren kann auch eine Kombination mit einem Weichmacher ausgewählt aus der folgenden Gruppe erfolgen: Adipate, Benzoate, Citrate, Cyclohexandicarboxylate, epoxidierte Fettsäureester, epoxidierte Pflanzenöle, epoxidierte acetylierte Glyceride, Furandicarboxylate, Phosphate, Phthalate, Sulfonamide, Sulfonate, Terephthalate, Trimellitate oder oligomeren oder polymeren Estern auf Basis von Adipin-, Bernstein- oder Sebacinsäure.

Die zuvor beschriebenen Ester oder Estergemische können in Klebstoffen, Dichtungsmassen, Beschichtungsmassen, Lacken, Farben, Plastisolen, Schäumen, Kunstleder, Fußbodenbelägen (z.B. Deckschicht), Dachbahnen, Unterbodenschutz, Gewebebeschichtungen, Kabeln oder Drahtisolierungen, Schläuchen, Extrusionsartikeln, sowie in Folien, insbesondere für den Automobilinnenbereich und auch in Tapeten oder Tinten eingesetzt werden.

Herstellung der Verbindungen

Beispiel 1: Abreicherung und Anreicherung von gesättigten Fettsäuremethylestern mittels Destillation aus epoxidiertem Methylsojat

Die gesättigten Fettsäuremethylester können aufgrund geringerer Siedepunkte destillativ von den epoxidierten Fettsäuremethylestern abgetrennt werden. Dazu wurde ein Kurzwegverdampfer vom Typ KDL 5 (Fa. UIC GmbH) eingesetzt. Verdampfer, Destillat- und Rückflussstrom konnten separat über Thermostaten beheizt werden. Dazu wurden 5000 g eines epoxidierten Methylsojats (Reflex 100, Fa. PolyOne) unter folgenden Bedingungen destilliert.

| | |
|---|---|
| Druck: | $< 10^{-3}$ mbar |
| Temperatur im Verdampfer: | 120 °C |
| Temperatur Destillat: | 40 °C |
| Temperatur Rückstand: | 40 °C |
| Wischerdrehzahl: | 313 rpm |
| Drehzahl Einförderpumpe: | 400 rpm |

Unter den beschriebenen Bedingungen fielen 74 Massen-% des Produkts als Rückstand und 26 Massen-% als Destillat an. Wie die analytischen Daten aus Tabelle 1 bestätigen, wurden die gesättigten Fettsäuren im Destillat bis zu einem Anteil von 44.6 % angereichert und im Rückstand bis zu einem Anteil von 2.6 % abgereichert. Rückstand und Destillat wurden unabhängig voneinander für weitere chemische Umsetzungen verwendet (Beispiel 2, 3).

Beispiel 2: Herstellung von epoxidiertem Isononylsojat aus abgereichertem epoxidiertem Methylsojat (Rückstand aus Beispiel 1)

Ansatz:

888 g epox. Methylsojat (Beispiel 1, Rückstand)
540 g Isononanol (Fa. Evonik)
2,22 g Tetra-iso-Nonyltitanat (TINT) (erhältlich durch Umesterung von Tetrabutyltitanat der Fa. Johnson Matthey mit Isononanol von Evonik; Reinheit des Nonyltitanats 95 %)

Umesterung:

Alle Edukte und der Katalysator wurden in eine Umesterungsapparatur mit einem 4 l Reaktionskolben, Rührer, Tauchrohr, Thermometer, Destillationskopf, 20 cm Raschigringkolonne, Vakuumteiler und Auffangkolben vorgelegt. Die Apparatur wurde eine Stunde mit 6 l $N_2$/ Stunde über das Tauchrohr gespült.

Die Edukte wurden langsam unter Rühren auf 180 °C aufgeheizt. Bei Temperaturen oberhalb von 160 °C fiel Methanol an, das kontinuierlich über den Destillationskopf aus der Reaktion entfernt wurde. Nach Erreichen der 180 °C wurde Vakuum angelegt und der Druck im Laufe der Reaktion kontinuierlich reduziert. Nach 8 h wurden nochmals 100 g Isononanol und 1.11 g TINT nachdosiert. Die Reaktionszeit betrug 16,5 Stunden. Am Ende der Reaktion lag ein Vakuum von 133 mbar an.

Der Umsatz wurde über GC-Analytik kontrolliert. Abgestellt wurde der Ansatz als der Anteil an epoxidiertem Biodiesel < 3 Flächen-% war. Nach 1 Stunden wurde die 1. Probe genommen, dann wurde bis zum Reaktionsende in regelmäßigen Abständen der Umsatz anhand von GC-Analysen kontrolliert.

Der Reaktionsaustrag aus der Umesterung wurde in einen 4 l Reaktionskolben umgefüllt und mit 2 % Aktivkohle bezogen auf die Masse Reaktionsaustrag versetzt. Der Kolben wurde an eine Claisenbrücke mit Vakuumteiler angebaut. Außerdem wurde ein Tauchrohr mit Stickstoffanschluss in den Kolben eingesetzt. Zusätzlich wurde ein Thermometer angebracht. Der Ansatz wurde unter Rühren mit Stickstoff gespült. Unter maximalem Vakuum (<1 mbar) wurde langsam aufgeheizt und die Temperatur entsprechend des Destillationsanfalls langsam bis auf 180 °C erhöht. 248 g an Leichtsiedern wurden abgetrennt und dann verworfen. Die Reaktionsmasse wurde auf < 90 °C abgekühlt und dann filtriert. Dazu wurde der Ester über einen Büchnertrichter mit Filterpapier und vorgepresstem Filterkuchen aus Filterhilfsmittel (Perlite Typ D14) mittels Vakuum in eine Saugflasche gefiltert.

Beispiel 3: Herstellung von epoxidiertem Isononylsojat aus angereichertem epoxidiertem Methylsojat (Destillat aus Beispiel 1)

Ansatz:

888 g epox. Methylsojat (Beispiel 1, Destillat)
540 g Isononanol (Fa. Evonik)
2,22 g Tetra-iso-Nonyltitanat (TINT) (erhältlich durch Umesterung von Tetrabutyltitanat der Fa. Johnson Matthey mit Isononanol von Evonik; Reinheit des Nonyltitanats 95 %)

Umesterung:

Alle Edukte und der Katalysator wurden in eine Umesterungsapparatur mit einem 4 l Reaktionskolben, Rührer, Tauchrohr, Thermometer, Destillationskopf, 20 cm Raschigringkolonne, Vakuumteiler und Auffangkolben vorgelegt. Die Apparatur wurde eine Stunde mit 6 l $N_2$/ Stunde über das Tauchrohr gespült.
Die Edukte wurden langsam unter Rühren auf 180 °C aufgeheizt. Bei Temperaturen oberhalb von 152 °C fiel Methanol an, das kontinuierlich über den Destillationskopf aus der Reaktion entfernt wurde. Nach Erreichen der 180 °C wurde Vakuum angelegt und der Druck im Laufe der Reaktion kontinuierlich reduziert. Die Reaktionszeit betrug 4 Stunden. Am Ende der Reaktion lag ein Vakuum von 46 mbar an.
Der Umsatz wurde über GC-Analytik kontrolliert. Abgestellt wurde der Ansatz als der Anteil an epoxidiertem Biodiesel < 0,3 Flächen-% war. Nach 1 Stunden wurde die 1. Probe genommen, dann wurde bis zum Reaktionsende in regelmäßigen Abständen der Umsatz anhand von GC-Analysen kontrolliert.
Der Reaktionsaustrag aus der Umesterung wurde in einen 4 l Reaktionskolben umgefüllt und mit 2 % Aktivkohle bezogen auf die Masse Reaktionsaustrag versetzt. Der Kolben wurde an eine Claisenbrücke mit Vakuumteiler angebaut. Außerdem wurde ein Tauchrohr mit Stickstoffanschluss in den Kolben eingesetzt. Zusätzlich wurde ein Thermometer angebracht. Der Ansatz wurde unter Rühren mit Stickstoff gespült. Unter maximalem Vakuum (<1 mbar) wurde langsam aufgeheizt und die Temperatur entsprechend des Destillationsanfalls langsam bis auf 180 °C erhöht. 107 g an Leichtsiedern wurden abgetrennt und dann verworfen. Die Reaktionsmasse wurde auf < 90 °C abgekühlt und dann filtriert. Dazu wurde der Ester über einen Büchnertrichter mit Filterpapier und vorgepresstem Filterkuchen aus Filterhilfsmittel (Perlite Typ D14) mittels Vakuum in eine Saugflasche gefiltert.

Vergleichsversuche für die Plastisolanwendung:

**1. Physikalisch-chemische Daten des reinen Weichmachers**

**1.1 Flüchtigkeit**

Die Flüchtigkeit von Weichmachern ist eine zentrale Eigenschaft für viele Polymeranwendungen. Hohe Flüchtigkeiten führen zu einer Exposition der Umwelt und durch verringerte Weichmacheranteile im Polymeren zu verschlechterten mechanischen Eigenschaften. Flüchtige Weichmacher werden daher häufig nur in geringen Anteilen zu anderen Weichmachersystemen beigemischt oder überhaupt nicht eingesetzt. Besondere Bedeutung hat die Flüchtigkeit zum Beispiel in Innenraumanwendungen (Tapeten, Automobile) oder aufgrund von Richtlinien und Normen bei Kabeln oder Lebensmittelverpackungen. Die Flüchtigkeit der reinen Weichmacher wurde mit Hilfe des Halogentrockners HB 43-S der Fa. Mettler Toledo bestimmt. Vor der Messung wurde eine leere, saubere Aluschale im Wägeteller platziert. Danach wurde die Aluschale mit einem Vlies tariert und etwa fünf Gramm Weichmacher auf das Vlies pipettiert und genau verwogen.
Durch das Schließen des Heizmoduls wurde die Messung gestartet und die Probe mit maximaler Heizrate (Voreinstellung) von Raumtemperatur auf 200 °C aufgeheizt und alle 30 Sekunden der entsprechende Masseverlust durch Verdampfung automatisch durch Wägung bestimmt. Nach 10 min wurde die Messung vom Gerät automatisch beendet.
Von jeder Probe wurde eine Doppelbestimmung durchgeführt.

1.2 Viskosität und Dichte

Das Stabinger Viskosimeter SVM 3000 ist ein Kombigerät, mit dem Dichte und Viskosität bestimmt werden können. Dazu sind in dem Gerät zwei Messzellen hintereinander geschaltet. Zur Bestimmung der Viskosität ist ein Rotationsviskosimeter mit Zylindergeometrie verbaut. Zur Bestimmung der Dichte eine Dichtemesszelle nach dem Biegeschwingerprinzip.

Durch einmaliges Einspritzen der Probe werden so beide Messwerte bestimmt. Gemessen werden die Proben bei 20 °C. Temperiert werden die Messzellen über ein Peltier Element (Reproduzierbarkeit 0,02 °C).

Gemessen werden die Proben mit dem voreingestellten Messmodus "MO-ASTM (PRECISE)" Messung mit höchster Genauigkeit und Wiederholungen, für Tests nach der Norm ASTM D7042. Dazu werden für jede Messung ca. 0,5 ml Probe nachdosiert (um Lufteinschlüsse oder Verunreinigungen auszuschließen).

Bei den internen Wiederholungen wird erst dann ein gültiges Ergebnis angezeigt, wenn die Abweichung der Werte nicht höher als +/- 0,1 % des Messwerts für die Viskosität und +/-0,0002 g/cm3 für die Dichte ist.

Zusätzlich zu den internen Wiederholungen wird von jeder Probe eine Doppelbestimmung durchgeführt.

Nach jeder Bestimmung wird das Gerät mit Aceton gereinigt und mit Luft getrocknet (eingebaute Pumpe).

1.3 Methodenbeschreibung zur Bestimmung des Anteils von Doppelbindungen, Epoxiden und Alkoholen via NMR-Spektroskopie

Die Bestimmung des Anteils von Doppelbindungen, Epoxiden und Alkoholen erfolgt durch $^1$H-NMR-Spektroskopie. Für die Aufnahme der Spektren werden zum Beispiel 50 mg Substanz in 0,6 ml $CDCl_3$ (enthaltend 1 Massen-% TMS) gelöst und in ein NMR-Röhrchen mit einem Durchmesser von 5 mm gefüllt.

Die NMR-spektroskopischen Untersuchungen können prinzipiell mit jedem handelsüblichen NMR-Gerät durchgeführt werden. Für die vorliegenden NMR-spektroskopischen Untersuchungen wurde ein Gerät vom Typ Avance 500 der Firma Bruker eingesetzt. Die Spektren wurden bei einer Temperatur von 303 K mit einem Delay (Verzögerung) von d1 = 5 Sekunden, 32 Scans (Durchgänge), einer Pulslänge von ca. 9,5 µs und einer Sweep Width (Spektrale Breite) von 10000 Hz mit einem 5 mm BBO-Probenkopf (broad band observer; Breitbandbeobachtung) aufgenommen. Die Resonanzsignale werden gegen die chemische Verschiebung von Tetramethylsilan (TMS = 0 ppm) als internen Standard aufgezeichnet. Mit anderen handelsüblichen NMR-Geräten werden mit den gleichen Betriebsparametern vergleichbare Ergebnisse erhalten.

Zur Bestimmung der Anteile der einzelnen Strukturelemente sind zunächst die zugehörigen Signale im NMR-Spektrum zu identifizieren. Nachfolgend sind verwendeten Signale mit ihrer Lage im Spektrum und der Zuordnung zu entsprechenden Strukturelementen aufgelistet:

- Die Signale im Bereich 4,8 bis 6,4 ppm wurden den $^1$H-Kernen der Doppelbindungen zugeordnet.

- Die Signale im Bereich 4,0 bis 3,25 ppm wurden den $^1$H-Kernen der Alkohole zugeordnet.

- Die Signale im Bereich 3,25 bis 2,85 ppm wurden den $^1$H-Kernen der Epoxide zugeordnet.

Zur Quantifizierung der Anteile werden Referenzsignale bekannter Größe benötigt. Verwendet wurden Methylengruppen des Fettsäurerestes oder des Alkoholrestes der Fettsäureester. Im Falle der Isononyl- und Isodecylester ist das Signal der Methylengruppe bei 2,3 ppm partiell durch Signale des Alkohols überlagert, daher wurde die Methylengruppe des Alkohols um 4 ppm herangezogen. Folgende Signale wurden verwendet:

- Die Signale der Methylengruppe in Nachbarschaft zur Carboxylgruppe der Fettsäure, welche als enges Signalmultiplett um 2,3 ppm im Spektrum zur Resonanz kommen.

- Die Signale der Methylengruppe in Nachbarschaft zum Sauerstoff der veresterten Alkohols (Isononylalkohol oder Isodecylalkohol) entsprechend dem Strukturelement - C$\underline{H}_2$-O-, welche im Bereich 3,9 bis 4,2 ppm im Spektrum zur Resonanz kommen.

Die Quantifizierung erfolgt durch Bestimmung der Fläche unter den jeweiligen Resonanzsignalen, d. h. der vom Signal von der Grundlinie eingeschlossenen Fläche. Handelsübliche NMR-Geräte verfügen über Vorrichtungen zur Integration der Signalfläche. In den vorliegenden NMR-spektroskopischen Untersuchung wurde die Integration mit Hilfe der Software "TOPSPIN", Version 3.1 durchgeführt.

Zur Berechnung des Anteils der Doppelbindungen wird der Integralwert x der Doppelbindungssignale im Bereich 4,8 bis 6,4 ppm durch den Integralwert der Referenzmethylengruppe r geteilt.

Zur Berechnung des Anteils der Epoxide wird der Integralwert y der Epoxidsignale im Bereich 2,85 bis 3,25 ppm durch den Integralwert der Referenzmethylengruppe r geteilt.

Zur Berechnung des Anteils der Alkohole wird der Integralwert z der Alkoholsignale im Bereich 3,9 bis 3,25 ppm durch den halben Integralwert der Referenzmethylengruppe r/2 geteilt.

Es werden die relativen Anteile der Strukturelemente Doppelbindung, Epoxid und Alkohol je Fettsäurerest enthalten.

1.4 Anteil gesättigter Fettsäuren

Für die gaschromatographischen Untersuchungen wurden 2 Methoden verwendet und die Ergebnisse beider Messungen kombiniert.

Die GC- Analyse nach Methode 1 erfolgte mit folgenden Parametern:

Kapillarsäule: 30 m DB-WAX; 0,32 mm ID; 0,5 $\mu$m Film
Trägergas: Helium
Gesamtfluss: -106 mL/min
Split: ca. 100 ml/min
Ofentemperatur: 80 °C - 10 °C/min - 220 °C (40 min)
Injektor: 250 °C
Detektor (FID): 250 °C
Injektionsvolumen: 1,0 $\mu$l

Die Identifizierung der Komponenten im Chromatogramm der Probe erfolgte mittels einer Vergleichslösung der relevanten Fettsäuremethylester. In diesem Fall handelt es sich hierbei um die Methylester Myristin-, Palmitin und Stearinsäure. Im Anschluss erfolgte eine Normierung der Signale im Chromatogramm mit Laufzeiten zwischen 8 und 20 min der Probe auf 100 Flächen-%. Methode 1 erlaubt eine Trennung und Quantifizierung der gesättigten und ungesättigten Fettsäuremethylester untereinander. Zur Ermittlung des Anteils der gesättigten Fettsäuren in den epoxidierten Fettsäuren wird die Probe (wie oben beschrieben vorbereitet) 1 zu 10 mit Heptan verdünnt und nach Methode 2 analysiert.

Die GC- Analyse nach Methode 2 erfolgte mit folgenden Parametern:

Kapillarsäule: 30 m DB-5HT; 0,32 mm ID; 0,1 $\mu$m Film
Trägergas: Helium
Säulenfluss: 2.6 ml/min
Ofentemperatur: 80 °C - 20 °C/min - 400 °C (30 min)
Injektor: cool on column, 80 °C- 140 °C/min - 400 °C
Detektor (FID): 400 °C
Injektionsvolumen: 1,0 $\mu$l

Für die Auswertung der Flächenprozentverteilung der gesättigten Fettsäuremethylester wurde wie folgt vorgegangen: Zunächst wurde der Retentionszeitbereich der gesättigten und ungesättigten Fettsäuremethylester mittels einer Vergleichslösung relevanter Fettsäuremethylester identifiziert. Es wurde eine Normierung aller Signale der Fettsäuremethylester (gesättigte, ungesättigte und epoxidierte Fettsäuremethylester) als Fettsäuren auf 100 Flächen-% durchgeführt. Die Anteile der einzelnen Fettsäuremethylester in Flächen-% konnten dann wie folgt berechnet werden:

Anteil der Fettsäuremethylester (gesättigt und ungesättigt nach Methode II in Flächen-%) multipliziert mit dem Anteil des jeweiligen Fettsäuremethylesters (gesättigt und ungesättigt nach Methode I in Flächen-% / 100%). Der Anteil des gesättigten FS ergibt sich dann durch aufsummieren der Anteile an Myristin-, Palmitin- uns Stearinfettsäuremethylester.

Beispiel:

Methode 1 liefert die Flächenprozente der gesättigten und ungesättigten Fettsäuremethylester (epoxidierte Fettsäuremethylester werden nicht berücksichtigt):

| | |
|---|---|
| Methylmyristat | 00,00 Flächen-% |
| Methylpalmitat | 17,11 Flächen-% |
| Methylstearat | 46,94 Flächen-% |
| Rest | 35,95 Flächen-% |
| Summe | 100,00 Flächen-% |

Die Summe der gesättigten Fettsäuren nach Methode 1 beträgt somit 64,05 Flächen-%

Methode 2 liefert die Flächenprozente der epoxidierten Fettsäuremethylester

| Un-/gesättigte Fettsäuremethylester | 4,85 Flächen-% |
|---|---|
| Epoxidierte Fettsäuremethylester | 95,15 Flächen-% |

Der Anteil an gesättigten Fettsäuremethylestern im Weichmacher berechnet sich dann wie folgt:

$$0,6405 \times 0,0485 \times 100 \text{ Flächen-}\% = 3,11 \text{ Flächen-}\%$$

Die Ergebnisse sind in Tabelle 1 dargestellt. Die Weichmachernummer (WM-Nr.) korreliert hierbei mit der Rezepturnummer aus Tabelle 2.

Tabelle 1:

| WM-Nr. | Masseverlust 200°C/10min [%] | Viskosität [mPas] | Dichte [mg/cm$^3$] | EZ/FS [eq.] | DB/FS [eq.] | OHZ/FS [eq.] | Anteil ges. FS [F-%] |
|---|---|---|---|---|---|---|---|
| 1 | 4,4 | 76 | 0,9741 | - | - | - | - |
| 2 | 4,0 | 50 | 0,9243 | 1,21 | 0,05 | 0,29 | 17,7 |
| 3* | 2,3 | 61 | 0,9364 | 1,62 | 0,01 | 0,22 | 2,6 |
| 4 | 5,5 | 26 | 0,8908 | 0,75 | 0,01 | 0,04 | 44,6 |
| * erfindungsgemäßes Estergemisch | | | | | | | |

EZ/FS: mittlere Anzahl an Epoxidgruppen pro Fettsäure

DB/FS: mittlere Anzahl an Doppelbindungen pro Fettsäure

OHZ/FS: mittlere Anzahl an Alkoholgruppen pro Fettsäure

Die Masseverluste des reinen Weichmachers liegen beim erfindungsgemäßen Ester (3) deutlich unter dem Masseverlust des Industriestandards DINP (1) und der Vergleichssubstanz PLS Green 9, einem kommerziell erhältlichen epoxidierten Fettsäureisononylester auf der Basis von Sojafettsäuren (WM-Nr. 2). Hohe Flüchtigkeiten führen zu einer Exposition der Umwelt und durch verringerte Weichmacheranteile im Polymeren zu verschlechterten mechanischen Eigenschaften.

**2. Herstellung des Plastisols**

Es wurde ein PVC-Plastisol hergestellt, wie es beispielsweise zur Fertigung von Deckstrichfilmen für Fußbodenbeläge verwendet wird. Die Angaben in den Plastisolrezepturen sind jeweils in Gewichtsanteilen. Als PVC wurde Vestolit B 7021-Ultra verwendet. Als Vergleichssubstanzen wurden Diisononylphthalat (DINP, VESTINOL 9 der Fa. Evonik Industries), und epox. Isononylsojat (PLS Green 9, Fa. Petrom) verwendet. Die Rezepturen der Polymerzusammensetzungen sind in Tabelle 2 aufgelistet.

Tabelle 2:

| Rezeptur: | 1 | 2 | 3* | 4 |
|---|---|---|---|---|
| B 7021 - Ultra | 100 | 100 | 100 | 100 |
| DINP | 50 | | | |
| Epox. Isononylfettsäureester (ex Sojaöl; PLS Green 9) | | 50 | | |

(fortgesetzt)

| Rezeptur: | 1 | 2 | 3* | 4 |
|---|---|---|---|---|
| Epox. Isononylfettsäureester (ex Sojaöl; ges. FS abgereichert) Beispiel 2 | | | 50 | |
| Epox. Isononylfettsäureester (ex Sojaöl; ges. FS angereichert) Beispiel 3 | | | | 50 |
| Drapex 39 | 3 | 3 | 3 | 3 |
| Mark CZ 149 | 2 | 2 | 2 | 2 |
| * Polymerzusammensetzung umfassend ein erfindungsgemäßes Estergemisch | | | | |

Neben den 50 Gewichtsteilen Weichmacher enthält jede Rezeptur noch 3 Gewichtsteile eines epoxidierten Sojabohnenöls als Co-Stabilisator (Drapex 39, Fa. Galata), sowie 2 Gewichtsteile eines Thermostabilisators auf Ca/Zn-Basis (Mark CZ 149, Fa. Galata).

Die Weichmacher wurden vor der Zugabe auf 25 °C temperiert. Zuerst wurden die flüssigen und dann die pulverförmigen Bestandteile in einen PE-Becher eingewogen. Von Hand wurde die Mischung mit einem Salbenspatel so eingerührt, dass kein unbenetztes Pulver mehr vorhanden war. Der Mischbecher wurde dann in die Klemmvorrichtung eines Dissolverrührers eingespannt. Vor dem Eintauchen des Rührers in die Mischung wurde die Drehzahl auf 1800 Umdrehungen pro Minute eingestellt. Nach dem Einschalten des Rührers wurde so lange gerührt, bis die Temperatur an der Digitalanzeige des Thermofühlers 30,0 °C erreichte. Damit war sicher gestellt, dass die Homogenisierung des Plastisols bei einem definierten Energieeintrag erreicht wurde. Danach wurde das Plastisol sofort bei 25,0 °C temperiert.

**3. Gelierverhalten**

Die Untersuchung des Gelierverhaltens der Pasten wurde im Physica MCR 101 im Oszillationsmodus mit einem Platte-Platte Messsystem (PP25), welches schubspannungsgesteuert betrieben wurde, vorgenommen. Eine zusätzliche Temperierhaube wurde an das Gerät angeschlossen, um eine homogene Wärmeverteilung und eine gleichmäßige Probentemperatur zu erreichen.

Folgende Parameter wurden eingestellt:

Modus:     Temperatur-Gradient
Start-Temperatur: 25 °C
End-Temperatur: 180 °C
Heiz/Kühlrate: 5 °C/min
Oszillations-Frequenz: 4-0,1 Hz Rampe logarithmisch
Kreisfrequenz Omega: 10 1/s
Anzahl Messpunkte: 63
Messpunktdauer: 0,5 min
Automatische Spaltnachführung F : 0 N
Konstante Messpunktdauer
Spaltweite 0,5 mm

Durchführung der Messung:

Auf die untere Messsystemplatte wurde mit dem Spatel ein Tropfen der zu messenden Plaste luftblasenfrei aufgetragen. Dabei wurde darauf geachtet, dass nach dem Zusammenfahren des Messsystems etwas Paste gleichmäßig aus dem Messsystem herausquellen konnte (nicht mehr als ca. 6 mm rundum). Anschließend wurde die Temperierhaube über der Probe positioniert und die Messung gestartet. Bestimmt wurde die sogenannte komplexe Viskosität der Paste in Abhängigkeit von der Temperatur. Da eine bestimmte Temperatur in einer (durch die Heizrate von 5 °C/min. festgelegten) Zeitspanne erreicht wird, wird neben der Geliertemperatur auch eine Aussage zur Geliergeschwindigkeit des vermessenen Systems erhalten. Ein Einsetzen des Geliervorganges war in einem plötzlichen starken Anstieg der komplexen Viskosität zu erkennen. Je früher dieser Viskositätsanstieg einsetzt, desto besser ist die Gelierfähigkeit des Systems.

Aus den erhaltenen Messkurven wird die Cross-Over-Temperatur bestimmt. Diese Methode berechnet den Schnittpunkt der beiden gewählten y-Variablen. Sie wird verwendet, um das Ende des linear-viskoelastischen Bereichs in einem Amplitudensweep (y: G', G"; x: gamma) zu finden, um die Kreuzungsfrequenz in einem Frequenzsweep (y: G', G"; x: Frequenz) zu finden oder um die Gelzeit bzw. Aushärtetemperatur festzustellen (y: G', G"; x: Zeit oder Temperatur). Die hier dokumentierte Cross-Over-Temperatur entspricht der Temperatur des ersten Schnittpunktes von G' und G".

Die Ergebnisse sind in Tabelle 3 dargestellt. Die Pastennummer korreliert hierbei mit der Rezepturnummer aus Tabelle 2.

Tabelle 3:

| Pastennr. | 1 | 2 | 3* | 4 |
|---|---|---|---|---|
| Cross-Over-Temperatur °C | 75.9 | 74.2 | 71.2 | 83.1 |
| * Paste umfassend eine erfindungsgemäßes Estergemisch | | | | |

Die Paste (3) mit dem erfindungsgemäßen Estergemisch weist die niedrigste Crossover-Temperatur auf. Dies ist gleichbedeutend mit einer beschleunigten Gelierung. Die Paste (4) mit erhöhtem Anteil an gesättigten Fettsäuren zeigt hingegen gegenüber der Paste (2) eine deutlich erhöhte Cross-Over-Temperatur.

Als weiteres Maß für die Gelierung wird ein deutlicher Anstieg der komplexen Viskosität betrachtet. Als Vergleichswert wird daher die Temperatur bei Erreichen einer Pastenviskosität von 1000 Pas verwendet. Die Ergebnisse sind in Tabelle 4 dargestellt. Die Pastennummer korreliert hierbei mit der Rezepturnummer aus Tabelle 2.

Tabelle 4:

| Pastennr. | 1 | 2 | 3* | 4 |
|---|---|---|---|---|
| Temperatur bei 1000 Pas | 86 | 111 | 84 | 147 |
| * Paste umfassend ein erfindungsgemäßes Estergemisch | | | | |

Die Paste (3) mit dem erfindungsgemäßen Estergemisch erreicht die geforderte Viskosität bei niedrigerer Temperatur als das DINP (1). Dies deutet ebenfalls auf ein verbessertes Gelierverhalten hin. Die Pasten mit erhöhtem Anteil an gesättigten Fettsäuren (4), aber auch die Paste (2), welche aus einem Pflanzenöl ohne Abreicherung der gesättigten Fettsäuren hergestellt wurde, zeigen eine vergleichsweise schlechte Gelierung.

Für weitere Untersuchungen an Weich-PVC Probekörpern wurden ausgelierte 1 mm-Polymerfilme aus den entsprechenden Plastisolen hergestellt (Gelierbedingungen im Mathisofen: 200 °C/2 min.).

## 4. Thermostabilitäten

Die Thermostabilitätsmessungen wurden an einem Thermotester (Typ LTE-TS Fa. Mathis AG) durchgeführt. Der Probenrahmen für die Thermostabilitätsmessung ist mit 14 Aluschienen bestückt. Die Aluschienen dienen als Probenhalter, in denen Proben bis zu einer Maximalbreite von 2 cm gelegt werden. Die Probenlänge beträgt 40 cm.

Die Ränder der zu untersuchenden Folien wurden mit Hilfe einer Schlagschere entfernt und die Folien wurden rechtwinklig geschnitten (Maße: 20 cm x 30 cm). Dann wurden zwei Streifen (20 * 2 cm) abgeschnitten. Die Streifen wurden nebeneinander in die Aluschienen vom Rahmen für die Thermostabilitätsmessung befestigt. Nach eingeregelter Temperatur wurde der Rahmen in der Führung des Thermotesters eingerastet und die Messung gestartet. Am Mathis Thermotester wurden folgende Parameter eingestellt:

Temperatur: 200 °C
Intervallvorschub: 28 mm
Intervallzeit: 1 min

Lüfterumdrehungszahl: 1800 U/min Mit Hilfe eines Byk Farbmessgerätes (Spectro Guide 45/0 Fa. Byk Gardner) wurden die L* a* b* incl. eines Gelbwertes Y nach Index D1925 ermittelt. Die eingestellte Lichtart C/2° und die Verwendung eines Probenbeobachters wurden benutzt um optimale Messergebnisse zu erzielen. Die Thermostabilitätsstreifen wurden nun bei jedem Vorschub (28 mm) vermessen. Da die Thermostabilitätsstreifen aus zwei 20 cm Streifen bestehen, wurde der Messwert an der Schnittstelle nicht bestimmt. Die Messwerte wurden direkt auf der Musterkarte hinter einer weißen Kachel bestimmt. Als Schwarzfärbung wurde der erste Messwerte nach überschreiten des Gelbwertmaximums bezeichnet.

Die Ergebnisse sind in Tabelle 5 dargestellt. Die Prüfkörpernummer korreliert hierbei mit der Rezepturnummer aus Tabelle 2.

Tabelle 5:

| Prüfkörpernummer | 1 | 2 | 3* | 4 |
|---|---|---|---|---|
| Zeit bis Schwarzfärbung (min) | 11 | >14 | >14 | - |

Die Prüfkörper (2) und (3) zeigten im betrachteten Zeitintervall im Thermotester keine Schwarzfärbung. Die Thermostabilität ist gegenüber dem Industriestandard DINP (1) deutlich erhöht. Dies ist auf ein Abfangen von gebildeten HCl durch die Epoxidfunktion zurückzuführen. Bei dem Prüfkörper (4) kam es zu einem starken Ausschwitzen des Weichmachers aufgrund geringer Kompatibilität mit dem PVC. Die Ursache hierfür ist der hohe Anteil an gesättigten Fettsäuren. Eine ordnungsgemäße Messung war mit dieser Probe nicht möglich.

## 5. Weichmachende Wirkung

Die Shore-Härte ist ein Maß für die Weichheit eines Probekörpers. Je weiter bei einer bestimmten Messdauer eine genormte Nadel in den Probenkörper eindringen kann, desto niedriger fällt der Messwert aus. Der Weichmacher mit der höchsten Effizienz ergibt bei gleicher Weichmachermenge den niedrigsten Wert für die Shore-Härte. Da in der Praxis Formulierungen / Rezepturen häufig auf eine bestimmte Shore-Härte hin eingestellt bzw. optimiert werden, kann bei sehr effizienten Weichmachern demnach ein bestimmter Anteil in der Rezeptur eingespart werden, was eine Kostenreduktion für den Verarbeiter bedeutet.

Zur Bestimmung der Shore-Härten wurden die wie oben beschrieben hergestellten Pasten in runde Gießformen aus Messing mit einem Durchmesser von 42 mm gegossen (Einwaage: 20,0 g). Dann wurden die Pasten in den Formen im Umlufttrockenschrank 30 min bei 200 °C geliert, nach Abkühlung entnommen und vor der Messung mindestens 24 Stunden im Klimaschrank (25 °C) gelagert. Die Dicke der Scheiben betrug ca. 12 mm.

Die Härte-Messungen wurden nach DIN 53 505 mit einem Shore-A-Messgerät der Fa. Zwick-Roell durchgeführt, der Messwert jeweils nach 3 Sekunden abgelesen. An jedem Prüfkörper wurden Messungen an drei verschiedenen Stellen durchgeführt, und ein Mittelwert gebildet.

Die Ergebnisse sind in Tabelle 6 dargestellt. Die Prüfkörpernummer korreliert hierbei mit der Rezepturnummer aus Tabelle 2

Tabelle 6:

| Prüfkörpernummer | 1 | 2 | 3* | 4 |
|---|---|---|---|---|
| Shore A | 82 | 82 | 78 | 97 |

Im Vergleich zum Industriestandard DINP (Prüfkörper 1) weist lediglich der Prüfkörper (3) mit dem erfindungsgemäßen Estergemisch eine niedrigere Shorehärte auf. Mit den erfindungsgemäßen Weichmachern können PVC-Mischungen hergestellt werden, die eine bessere Effizienz besitzen als beim Einsatz des entsprechenden DINPs. Dadurch kann Weichmacher eingespart werden, was zu geringeren Rezepturkosten führt.

## 6. Wasserbeständigkeit

Die Alterungsbeständigkeit unter verschiedenen Umgebungsbedingungen ist ein weiteres wesentliches Qualitätskriterium für PVC-Weichmacher. Insbesondere das Verhalten gegenüber Wasser (Wasseraufnahme & Auswaschverhalten von Rezepturbestandteilen) und gegenüber erhöhten Temperaturen (Ausdunstung von Rezepturbestandteilen & thermische Alterung) bietet einen Einblick in die Alterungsbeständigkeit.

Für die Bestimmung der Wasserbeständigkeit wurden ausgelierte 1 mm-Polymerfilme, die aus den entsprechenden Plastisolen hergestellt wurden (Gelierbedingungen im Mathisofen: 200 °C/2 min.), verwendet. Als Prüfkörper wurden Folienkreise mit 3 cm Durchmesser ausgeschnitten. Vor der Wasserlagerung wurden die Prüfkörper für 24 Stunden in einem mit Trockenmittel (KC-Trockenperlen, Fa. BASF SE) ausgerüsteten Exsikkator bei 25 °C gelagert. Das Ausgangsgewicht (Einwaage) wurde mit einer Analysenwaage auf 0,1 mg genau bestimmt. Die Prüfkörper wurden nun in einem mit vollentsalztem (VE) Wasser gefülltem Schüttelbad (Typ "WNB 22" mit Peltierkühlvorrichtung "CDP"; Fa. Memmert GmbH) bei einer Temperatur von 30 °C für 7 Tage mit Probenhaltern unter der Wasseroberfläche gelagert und kontinuierlich bewegt. Nach der Lagerung wurden die Kreise dem Wasserbad entnommen, abgetrocknet und ausgewogen (= Gewicht nach 7 Tagen). Nach der Auswage wurden die Prüfkörper wiederum für 24 Stunden in einem mit Trockenmittel (KC-Trockenperlen) ausgerüsteten Exsikkator bei 25 °C gelagert und anschließend nochmals ausgewogen (Endauswage = Gewicht nach Trocknung). Aus der Differenz zur Einwage vor der Wasserlagerung wurde der prozentuale Massenverlust durch Wasserlagerung (entspricht Verlust durch Auswaschungen) berechnet.

Die Ergebnisse sind in Tabelle 7 dargestellt. Die Prüfkörpernummer korreliert hierbei mit der Rezepturnummer aus Tabelle 2.

Tabelle 7:

| Prüfkörper-Nr. | 1 | 2 | 3* | 4 |
|---|---|---|---|---|
| Masseverlust nach Trocknung [%] | 0,07 | 0,20 | 0,10 | - |

Die Masseverluste aller Prüfkörper weisen mit < 0,5% sehr gute Werte auf. Deutlich erhöhte Masseverluste schränken die Anwendbarkeit der Weichmacher stark ein. Bei dem Prüfkörper (4) kam es zu einem starken Ausschwitzen des Weichmachers aufgrund geringer Kompatibilität mit dem PVC. Die Ursache hierfür ist der hohe Anteil an gesättigten Fettsäuren. Eine ordnungsgemäße Messung war mit dieser Probe nicht möglich.

Die zuvor beschriebenen Versuche haben aufgezeigt, dass die erfindungsgemäßen Ester sehr gute Weichmachereigenschaften aufweisen. Es konnte gezeigt werden, dass über den Anteil gesättigter Fettsäuren die Weichmachereigenschaften des Esters verändert, und somit gezielt eingestellt werden können. Durch eine Abreicherung an gesättigten Fettsäuren im Estergemisch steigt der Anteil an ungesättigten Fettsäuren (vor der Epoxidierung) und somit an Epoxidgruppen pro Fettsäure (nach der Epoxidierung).

Es ist somit möglich, den Ester gezielt auf die Weichmachereigenschaft hin zu optimieren, welche im geplanten Einsatz des Weichmachers als kritisch erachtet wird.

**Patentansprüche**

1. Isononylestergemisch eines epoxidierten Fettsäuregemisches, wobei das Fettsäuregemisch aus einem pflanzlichen Öl gewonnen wurde, und wobei der Anteil an gesättigten Fettsäuren im Isononylestergemisch unter dem Anteil an gesättigten Fettsäuren des pflanzlichen Öles liegt, aus dem die Fettsäuren gewonnen wurden, und die mittlere Anzahl an Epoxidgruppen pro Fettsäure größer 1,00 ist.

2. Isononylester nach Anspruch 1,
   wobei es sich bei dem pflanzlichen Öl um Sojaöl handelt.

3. Isononylestergemisch nach Anspruch 1 oder 2,
   wobei die mittlere Anzahl an Epoxidgruppen pro Fettsäure größer 1,20 ist.

4. Isononylestergemisch nach einem der Ansprüche 1 bis 3,
   wobei der Anteil an gesättigten Fettsäuren kleiner 10 Flächen-% ist.

5. Verfahren zur Herstellung eines Isononylestergemisch nach einem der Ansprüche 1 bis 4, umfassend die Verfahrensschritte:

   a1) Gewinnung eines Fettsäuregemisches aus einem pflanzlichen Öl,
   b1) Abreicherung des Anteils an gesättigten Fettsäuren im Fettsäuregemisch,
   c1) Epoxidierung des Fettsäuregemisches,
   d1) Veresterung des Fettsäurengemisches mit Isononanol.

6. Verfahren zur Herstellung eines Isononylestergemisch nach einem der Ansprüche 1 bis 4, umfassend die Verfahrensschritte:

   a2) Gewinnung eines Fettsäureestergemisches aus einem pflanzlichen Öl,
   b2) Abreicherung des Anteils an gesättigten Fettsäureestern im Fettsäureestergemisch,
   c2) Epoxidierung des Fettsäureestergemisches,
   d2) Umesterung des Fettsäureestergemisches mit Isononanol.

7. Verfahren nach einem der Ansprüche 5 oder 6,
   wobei die Abreicherung mittels Destillation der epoxidierten Ester erfolgt.

8. Verwendung eines Isononylestergemisch nach einem der Ansprüche 1 bis 4, als Weichmacher für Polymere.

**Claims**

1. Isononyl ester mixture of an epoxidized fatty acid mixture, the fatty acid mixture having been obtained from a vegetable oil, the fraction of saturated fatty acids in the isononyl ester mixture being below the fraction of saturated fatty acids in the vegetable oil from which the fatty acids have been obtained, and the average number of epoxide groups per fatty acid being greater than 1.00.

2. Isononyl ester according to Claim 1,
   the vegetable oil being soyabean oil.

3. Isononyl ester mixture according to Claim 1 or 2,
   the average number of epoxide groups per fatty acid being greater than 1.20.

4. Isononyl ester mixture according to any of Claims 1 to 3,
   the fraction of saturated fatty acids being less than 10 area%.

5. Process for preparing an isononyl ester mixture according to any of Claims 1 to 4, comprising the following process steps:

   a1) recovering a fatty acid mixture from a vegetable oil,
   b1) depleting the fraction of saturated fatty acids in the fatty acid mixture,
   c1) epoxidizing the fatty acid mixture,
   d1) esterifying the fatty acid mixture with isononanol.

6. Process for preparing an isononyl ester mixture according to any of Claims 1 to 4, comprising the following process steps:

   a2) recovering a fatty acid ester mixture from a vegetable oil,
   b2) depleting the fraction of saturated fatty acid esters in the fatty acid ester mixture,
   c2) epoxidizing the fatty acid ester mixture,
   d2) transesterifying the fatty acid ester mixture with isononanol.

7. Process according to either of Claims 5 and 6,
   the depletion taking place by distillation of the epoxidized esters.

8. Use of an isononyl ester mixture according to any of Claims 1 to 4 as plasticizer for polymers.

**Revendications**

1. Mélange d'esters isononyliques d'un mélange d'acides gras époxydés, le mélange d'acides gras ayant été obtenu à partir d'une huile végétale et la proportion d'acides gras saturés dans le mélange d'esters isononyliques étant inférieure à la proportion d'acides gras saturés de l'huile végétale à partir de laquelle les acides gras ont été obtenus et le nombre moyen de groupes époxyde par acide gras étant supérieur à 1,00.

2. Esters isononyliques selon la revendication 1, l'huile végétale étant une huile de soja.

3. Mélange d'esters isononyliques selon la revendication 1 ou 2, le nombre moyen de groupes époxyde par acide gras étant supérieur à 1,20.

4. Mélange d'esters isononyliques selon l'une quelconque des revendications 1 à 3, la proportion d'acides gras saturés étant inférieure à 10% en surface.

5. Procédé pour la préparation d'un mélange d'esters isononyliques selon l'une quelconque des revendications 1 à 4, comprenant les étapes de Procédé :

   a1) production d'un mélange d'acides gras à partir d'une huile végétale,
   b1) appauvrissement de la proportion d'acides gras saturés dans le mélange d'acides gras,
   c1) époxydation du mélange d'acides gras,
   d1) estérification du mélange d'acides gras avec de l'isononanol.

6. Procédé pour la préparation d'un mélange d'esters isononyliques selon l'une quelconque des revendications 1 à 4, comprenant les étapes de Procédé :

   a2) production d'un mélange d'esters d'acide gras à partir d'une huile végétale,
   b2) appauvrissement de la proportion d'esters d'acide gras saturés dans le mélange d'esters d'acide gras,
   c2) époxydation du mélange d'esters d'acide gras,
   d2) transestérification du mélange d'esters d'acide gras avec de l'isononanol.

7. Procédé selon l'une quelconque des revendications 5 ou 6, l'appauvrissement ayant lieu par distillation des esters époxydés.

8. Utilisation d'un mélange d'esters isononyliques selon l'une quelconque des revendications 1 à 4 comme plastifiant pour des polymères.

EP 2 964 739 B1

**IN DER BESCHREIBUNG AUFGEFÜHRTE DOKUMENTE**

**In der Beschreibung aufgeführte Patentdokumente**

- WO 0198404 A2
- WO 2013003225 A2
- WO 2011072346 A

**In der Beschreibung aufgeführte Nicht-Patentliteratur**

- Visions in Plastics. GIT-Verlag, Oktober 2012, vol. 3, 28-29
- **D. ORTIZ MARTINZ.** *Test the Best*